**Europäisches Patentamt**

**European Patent Office**

**Office européen des brevets**

(11) Veröffentlichungsnummer: **0 520 244 A2**

## EUROPÄISCHE PATENTANMELDUNG

(21) Anmeldenummer: **92109764.8**

(51) Int. Cl.⁵: **B60Q 5/00**

(22) Anmeldetag: **10.06.92**

(30) Priorität: **10.06.91 DE 9107128 U**

(43) Veröffentlichungstag der Anmeldung:
**30.12.92 Patentblatt 92/53**

(84) Benannte Vertragsstaaten:
**AT BE CH DE DK ES FR GB GR IT LI NL PT SE**

(71) Anmelder: **Wischermann, Josef**
**Dreimühlenstrasse 38**
**W-8000 München 5(DE)**
Anmelder: **Blanchard, Michel**
**Belgradstrasse 61**

**W-8000 München 40(DE)**

(72) Erfinder: **Wischermann, Joseph**
**Dreimühlenstrasse, 38**
**W-8000 München 40(DE)**

(74) Vertreter: **Pellmann, Hans-Bernd, Dipl.-Ing. et al**
**Patentanwaltsbüro Tiedtke-Bühling-Kinne & Partner, Bavariaring 4**
**W-8000 München 2(DE)**

(54) **Elektronische Überwachungsvorrichtung.**

(57) Elektronische Überwachungseinrichtung für zumindest zwei Betriebsparameter einer Brennkraftmaschine mit zumindest zwei Betriebsparameter-Sensorschaltern. Bei Erreichen eines Schwellwertes kann mit den Betriebsparameter-Sensorschaltern eine Warnvorrichtung betätigt werden. In der Überwachungseinrichtung sind zumindest zwei Betriebsparameter-Sensorschalter elektrisch mit der Warnvorrichtung derart verbunden, daß bei Überschreitung zumindest eines vorgegebenen Betriebsparameter-Schwellenwertes der entsprechende Betriebsparameter-Sensorschalter die Warnvorrichtung einschaltet.

FIG. 1

Die Erfindung betrifft eine elektronische Überwachungsvorrichtung für zumindest zwei Betriebsparameter einer Brennkraftmaschine gemäß dem Oberbegriff des Patentanspruchs 1.

Üblicherweise werden die Betriebsparameter von Brennkraftmaschinen, die beispielsweise in Kraftfahrzeugen eingebaut sind, überwacht. Diese Überwachung erfolgt hierbei in der Regel derart, daß bei Betrieb der Maschine ein Sensor einen Betriebsparameter erfaßt und diesen zur Anzeige bringt oder daß das Überschreiten eines Betriebsparameterschwellwertes angezeigt wird. Gewöhnlich wird in Kraftfahrzeugen ein unzulässig geringer Öldruck mittels eines Warnlichtes angezeigt. Weiterhin wird in Kraftfahrzeugen mit wassergekühlter Brennkraftmaschine üblicherweise die Kühlwassertemperatur angezeigt. Hierfür wird mit einem Temperaturfühler die Wassertemperatur gemessen und in der Regel mittels eines analogen Anzeigeinstrumentes angezeigt. Bei einer Vielzahl von Kraftfahrzeugen ist dieser Temperaturfühler mit einem Thermostatregler verbunden, der einen zusätzlichen Ventilator zur Unterstützung der Kühlwasser-Kühlvorrichtung betreibt.

Da die Maschinentemperatur und somit ebenfalls die Kühlwassertemperatur Betriebsgrößen sind, die sich sehr langsam über einen langen Zeitraum verändern können, besteht die Möglichkeit, daß beispielsweise das Überschreiten der maximalen Temperatur nicht bemerkt wird, da dem Kraftfahrzeugführer eine stetige Temperaturzunahme nicht auffällt. Hierdurch besteht die Gefahr, daß die Brennkraftmaschine über längere Zeit bei unzulässig hoher Temperatur betrieben wird, wodurch irreparable Schäden an dieser entstehen können, obwohl das Überschreiten des Schwellwertes für die Kühlwassertemperatur oder die Maschinentemperatur korrekt angezeigt wird.

Eine weitere Ursache für das unbemerkte Überschreiten der zulässigen Betriebsparameter von Brennkraftmaschienen besteht, speziell in Kraftfahrzeugen heutzutage darin, daß der Kraftfahrzeugführer durch den Straßenverkehr derart stark beansprucht wird, daß die Anzeigeeinrichtungen lange Zeit nicht beobachtet wird. Zusätzlich wird der Kraftfahrzeugführer in speziellen Verkehrssituationen, wie beispielsweise beim Durchfahren einer Autobahnbaustelle, mit leuchtenden Verkehrsanzeigen und einer Vielzahl von Verkehrsschildern, einer Reizüberflutung ausgesetzt, so daß optische Anzeigeeinrichtungen leicht übersehen werden.

Bei Kühlwassertemperaturmeßvorrichtungen, die mit dem zuvor genannten Regelthermostaten verbunden sind kommt es des öfteren vor, daß ein Ausfall der Regelthermostaten zu einem gleichzeitigen Ausfall der Temperaturanzeige des Kühlwassers führt. In einem solchen Fall wird ein Überschreiten der zulässigen Kühlwassertemperatur nicht angezeigt, wodurch ebenfalls ein Maschinenschaden entstehen kann.

Der Erfindung liegt daher die Aufgabe zugrunde, eine gattungsgemäße elektronische Überwachungseinrichtung derart weiterzubilden, daß gemessene Betriebsparameter auf zuverläßige Weise überwacht werden.

Diese Aufgabe wird durch die Merkmale des kennzeichnenden Teils des Patentanspruchs 1 gelöst.

Erfindungsgemäß sind zumindest zwei BetriebsparameterSensorschalter elektrisch mit einer Warnvorrichtung derart verbunden, daß bei Überschreitung zumindest eines vorgegebenen Betriebsparameter-Schwellenwertes der entsprechende Betriebsparameter-Sensorschalter die Warnvorrichtung einschaltet. Da bei der erfindungsgemäßen Überwachungseinrichtung nur eine zentrale Warnvorrichtung vorgesehen ist, wird die bei einem Defekt an der Brennkraftmaschine die Aufmerksamkeit des Betreibers zuverlässig auf die Schadensquelle gerichtet wird.

Besonders vorteilhaft ist es, wenn die Warnvorrichtung eine akustischer Signalgeber ist, da somit der Kraftfahrzeugführer auch auf die Betriebsstörung hingewiesen wird wenn er gerade den Straßenverkehr beobachtet.

Weitere vorteilhafte Ausgestaltungen sind in den Unteransprüchen dargelegt.

Die Erfindung wird nachstehend anhand eines Ausführungsbeispiels unter Bezugnahme auf die Zeichnung näher beschrieben.

Es zeigen:

Fig. 1 ein Blockschaltbild der Warnvorrichtung und

Fig. 2 ein elektrisches Schaltbild der Warnvorrichtung.

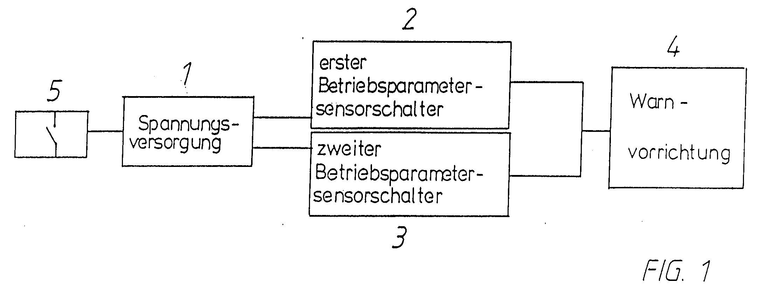

Fig. 1 zeigt in einem Blockschaltbild schematisch die Funktionsweise der elektronischen Überwachungseinrichtung. Diese besteht aus einer Spannungsquelle 1, einem ersten Betriebsparameter-Sensorschalter 2 einem zweiten Betriebsparameter-Sensorschalter 3 einer Warnvorrichtung 4 und einer Schaltvorrichtung 5.

Das Betätigen der Schaltvorrichtung 5 entspricht dem Starten bzw. dem Abschalten einer Brennkraftmaschine. Ist ein Einschalten der Schaltvorrichtung 5 erfolgt, so wird der Überwachungsvorrichtung die notwendige Versorgungsspannung aus der Spannungsquelle 1 zugeführt. Somit ist gewährleistet, daß die Überwachungseinrichtung nur bei Betrieb der Brennkraftmaschine arbeitet, wodurch verhindert wird bei stehender Maschine eine Betriebsstörung angezeigt wird, da bei stehender Maschine Betriebsparameter auftreten können, die bei laufender Maschine unzulässig sind. Weiterhin wird auf diese Weise ein unnötiger Ernergieverbrauch unterbunden.

Ist die Überwachungseinrichtung auf die beschriebene Weise aktiviert, kontrollieren der erste und der zweite Betriebsparameter-Sensorschalter 2, 3 die entsprechenden Betriebsparameter ununterbrochen. Diese Betriebsparameter sind beispielsweise der Öldruck und die Kühlwassertemperatur. Wird von mindestens einem der beiden Betriebsparameter-Sensorschalter 2, 3 das Überschreiten eines Schwellwertes des entsprechenden Betriebsparameters erfaßt, so wird ein Signal an die Warnvorrichtung 4 weitergeleitet. Durch dieses Signal wird die Warnvorrichtung 4 eingeschaltet und von dieser automatisch ein Warnsignal ausgegeben, das von dem Betreiber der Brennkraftmaschine sicher bemerkt wird.

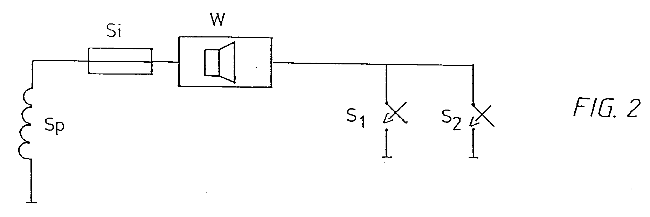

Fig. 2 zeigt das elektrische Schaltbild eines auf einfache Weise aufzubauendes Ausführungsbeispiels. Hierbei besteht die gezeigte Schaltung aus einer Primärwicklung SP einer Zündspule, einer Sicherung Si, einem akustischen Warnsignalgeber W, einem tempearturempfindlichen Schalter S1 und einem Öldruckschalter S2.

Sobald die Brennkraftmaschine gestartet wird liegt eine Versorgungsspannung zwischen den Anschlüssen der Primärwicklung SP an. Da üblicherweise der Öldruck erst kurze Zeit nach dem starten den gewünschten Wert angenommen hat, ist der Öldruckschalter S2 geschlossen, wodurch eine elektrische Verbindung mit der Schaltungsmasse besteht. Auf diese Weise ist ein durchgehender Stromkreis von der Primärwicklung SP über die Sicherung Si, dem Warnsignalgeber W dem Öldruckschalter S2 zur Schaltungsmasse, mit der die Primärwicklung SP ebenfalls verbunden ist, hergestellt und vom Warnsignalgeber W automatisch ein akustisches Warnsignal abgegeben. Sobald der Öldruck ausreichend aufgebaut ist öffnet der Öldruckschalter S2, wodurch der Warnsignalgeber W ausgeschaltet wird.

Durch den zuvor beschriebenen Vorgang wird dem Betreiber der Brennkraftmaschine während der Startphase der Maschine signalisiert, daß die Überwachungseinrichtung zuverlässig arbeitet.

Parallel zum Öldruckschalter S2 ist der temperaturempfindliche Schalter S1 zwischen den Warnsignalgeber W und der Schaltungsmasse geschaltet. Dieser Schalter S1 überwacht beispielsweise die Kühlwassertemperatur. Bei kalter Maschine, bzw. solange die Kühlwassertemperatur einen vorgegebenen Schwellwert (z.B. 95°C) nicht überschreitet, ist der Schalter S1 geöffnet, d.h. daß bei störungsfreiem Betrieb der Brennkraftmaschine kein Warnsignal vom Warnsignalgeber W abgegeben wird.

Sobald während des Betriebs der Brennkraftmaschine jedoch auch nur einer der beiden Betriebsparameter seinen jeweiligen vorgegebenen Schwellwert überschreitet, wird einer der beiden Schalter S1 oder S2 geschlossen, wodurch der Warnsignalgeber W automatisch betrieben wird. Selbstverständlich ist durch diese Schaltung auch in dem Fall, daß beide überwachten Betriebsparameter ihre zulässigen Schwellwerte gleichzeitig überschreiten, gewährleistet, daß der Warnsigalgeber W betrieben wird.

Mittels der Sicherung Si wird bei Überlastung der Schaltung durch eine zwangsweise Unterbrechung des Stromkreises verhindert, daß weitere Schadensquellen, wie beispielsweise Kabelbrand, entstehen.

Vorzugsweise ist der Warnsignalgeber W als akustischer Signalgeber ausgeführt. Ist dieser beispielsweise im Innenraum eines Kraftfahrzeuges angebracht, wird der Kraftfahrzeugführer durch ein akustisches Signal auf einen unzulässigen Betriebsparameter hingewiesen. Somit kann sich der Kraftfahrzeugführer bei einwandfreiem Betrieb der Brennkraftmaschine auf den Straßenverkehr konzentrieren. Erst beim Ertönen des Warnsignals braucht er die weiteren optischen Anzeigevorrichtungen zum Bestimmen der Schadensquelle zu kontrollieren.

Weiterhin wird der temperaturempfindliche Schalter S1 vorzugsweise als zusätzlicher Schalter in die Wand eines Kühlwasserschlauches montiert (nicht gezeigt). Dies erfolgt in dem eine Öffnung in die Wand des Kühlwasserschlauchs eingebracht wird, in die unter Ausbildung einer wasserdichten Verbindung ein entsprechender Sensorsschalter eingebaut wird. Dieser Sensorschalter wird parallel an den Öldruckschalter, der in jedem Kraftfahrzeug üblicherweise vorhanden ist, angeschlossen und mit der Warnvorrichtung W, die im Innenraum des Kraftfahrzeugs angeordnet ist verbunden. Diese Montage kann leicht und zuverlässig von jedem Kraftfahrzeugmechaniker durchgeführt werden, wodurch die Erfindung zum Nachrüsten in jedes beliebige Kraftfahrzeug geeignet ist. Elektronische Überwachungseinrichtung für zumindest zwei Betriebsparameter einer Brennkraftmaschine mit zumindest zwei Betriebsparameter-Sensorschaltern. Bei Erreichen eines Schwellwertes kann mit den Betriebsparameter-Sensorschaltern eine Warnvorrichtung betätigt werden. In der Überwachungseinrichtung sind zumindest zwei Betriebsparameter-Sensorschalter elektrisch mit der Warnvorrichtung derart verbunden, daß bei Überschreitung zumindest eines vorgegebenen Betriebsparameter-Schwellenwertes der entsprechende BetriebsparameterSensorschalter die Warnvorrichtung einschaltet.

**Patentansprüche**

1. Elektronische Überwachungseinrichtung für zu-

mindest zwei Betriebsparameter einer Brenn-kraftmaschine,
mit zumindest zwei Betriebsparameter-Sensorschaltern, mittels denen bei Erreichen eines Schwellwertes eine Warnvorrichtung betätigbar ist,
**dadurch gekennzeichnet,**
daß die Warnvorrichtung (4; W) den beiden Betriebsparameter-Sensorschaltern (2, 3; S1, S2) zugeordnet ist und diese derart elektrisch mit der Warnvorrichtung (W) verbunden sind, daß bei Überschreitung zumindest eines vorgegebenen Betriebsparameter-Schwellwertes der entsprechende Betriebsparameter-Sensorschalter (2, 3; S1, S2) die Warnvorrichtung (W) einschaltet.

2. Elektronische Überwachungseinrichtung nach Anspruch 1, dadurch gekennzeichnet, daß die Warnvorrichtung (W) ein akustischer Signalgeber ist.

3. Elektronische Überwachungseinrichtung nach Anspruch 1 oder 2, dadurch gekennzeichnet, daß die Betriebsparameter-Sensorschalter (2, 3; S1, S2) zueinander parallel geschaltet sind.

4. Elektronische Überwachungseinrichtung nach einem der vorhergehenden Ansprüche, dadurch gekennzeichnet, daß einer der Betriebsparameter-Sensorschalter (2, 3; S1, S2) ein Öldruckschalter ist.

5. Elektronische Überwachungseinrichtung nach einem der vorhergehenden Ansprüche, dadurch gekennzeichnet, daß der zweite Betriebsparameter-Sensorschalter (2, 3; S1, S2) ein Kühlwassertemperaturschalter ist.

6. Elektronische Überwachungseinrichtung, nach Anspruch 5, dadurch gekennzeichnet, daß der Kühlwassertemperaturschalter im Kühlwasser-schlauch angeordnet ist.

FIG. 1

EP 0 520 244 A2

FIG. 2